# EUROPEAN PATENT SPECIFICATION

(11) **EP 0 687 874 B1**
(45) Date of publication and mention of the grant of the patent: **04.02.1998**
(21) Application number: 95105690.2
(22) Date of filing: 15.04.1995
(51) Int. Cl.: F25D 29/00

(54) **Refrigerating or freezing apparatus with explosion-proof control panel**
Kühl- oder Gefriergerät mit explosionssicherem Steuerpult
Appareil de refroidissement ou de congélation avec pupitre de commande

(30) Priority: 20.05.1994 IT PN940018 U
(43) Date of publication of application: 20.12.1995
(73) Proprietor: ELECTROLUX ZANUSSI ELETTRODOMESTICI S.p.A., 33170 Pordenone (IT)
(72) Inventor: Paroni, Luigi, I-33033 Codroipo, Udine (IT)
(74) Representative: Giugni, Valter

(56) References cited:
- AT-B- 333 321
- DD-A- 251 395
- DE-A- 3 404 256
- GB-A- 2 248 343
- US-A- 4 829 776

## Description

The present invention refers to a refrigeration apparatus provided with at least a food storage compartment and a corresponding control panel arranged within said food storage compartment in such a manner that possible leakages of the inflammable gas contained in the refrigerating circuit, and diffusing inside said food storage compartment, are prevented from getting ignited by sparks generated inside said control panel.

For reasons of greater simplicity, the following description will refer to a freezing apparatus with a single food storage compartment, but it will be appreciated that the invention extends to also cover refrigeration apparatuses that may be provided with several food storage compartments and related control panels.

It is a largely known fact that the pressure exerted by the public opinion in favour of increasingly environment-friendly products, ie. products that must be environmentally sustainable even after they are discarded at the end of their life cycle, has had both directly and indirectly an impact on industry as a whole, inducing it to develop products that are capable of meeting such environment-oriented requirements to an ever greater extent. In this connection, a direct impact is unfolding through a clear trend which is discernible among consumers in general, who seem to increasingly favour so-called "ecological" or green products, putting environment-friendliness on top of their purchase criteria, as stimulated by press and advertising campaigns that are quite often made on purpose, ie. for reasons of self-interest. On the other hand, an indirect impact is being produced by the setting up and the imposition of a whole set of regulatory, manufacturing and product design obligations aiming at gradually marginalizing products that are not considered or perceived as being adequately ecological.

It is basically for this second reason that all types of refrigeration apparatuses making use of chlorofluorocarbons (CFCs) as blowing agents in their thermal insulation foams have been phased out, or are now being phased out, from production by the manufacturers in the most advanced countries of this world, while the public opinion is clearly showing a general sensitiveness for and interest in the purchase of refrigerators that do not contain chlorofluorocarbons at all, ie. not even as working fluids in the refrigeration circuit.

As a consequence, refrigeration appliances have been developed in which the refrigerant or working fluid is made up by a gas or a mixture of gases that do not feature any significant ozone-depletion potential. However, such gases have frequently the undesired characteristic of being inflammable, as for instance in the case of propane or butane.

In order to prevent any risk of explosion in the case of such gases leaking into the closed compartment containing the stored food, particular configurations have been proposed for the internal lighting lamp, which is accordingly provided with a special safety sheathing provision adapted to prevent the atmosphere surrounding the lamp, and possibly saturated with inflammable gas, from coming into contact with the glowing filament of the lamp, even if the latter should get broken accidentally, thereby neutralizing any risk of explosion.

However, this is not enough in view of fully excluding the risk of explosions being possibly triggered, owing to the presence, within said food storage compartment, of further electric devices that are potentially able to generate sparks or restricted glowing areas.

One of these devices is the control panel of the freezing compartment, or anyway the food storage compartment, said control panel usually containing such devices as the thermostat, the indicator and warning lights, the thermometer, the fast-freeze button and the like.

It would therefore be desirable, and it is in fact a main purpose of the present invention, to provide a refrigerating or freezing apparatus, the refrigerating circuit of which is filled with inflammable gas as a working fluid, and which is provided with at least a food storage compartment and a corresponding control panel arranged so as to be protected against the risk of becoming a source capable of triggering the ignition of the inflammable gas that could possibly leak into the food storage compartment.

This and further aims are reached in a refrigeration apparatus according to claim 1. In this apparatus, the control panel is arranged within said food storage compartment and is provided with a special air-tight protection means, as illustrated in the description which is given below by way of non-limiting example with reference to the accompanying drawings, in which:
- Figure 1 is an outer view showing schematically a hermetically sealed control panel according to the present invention;

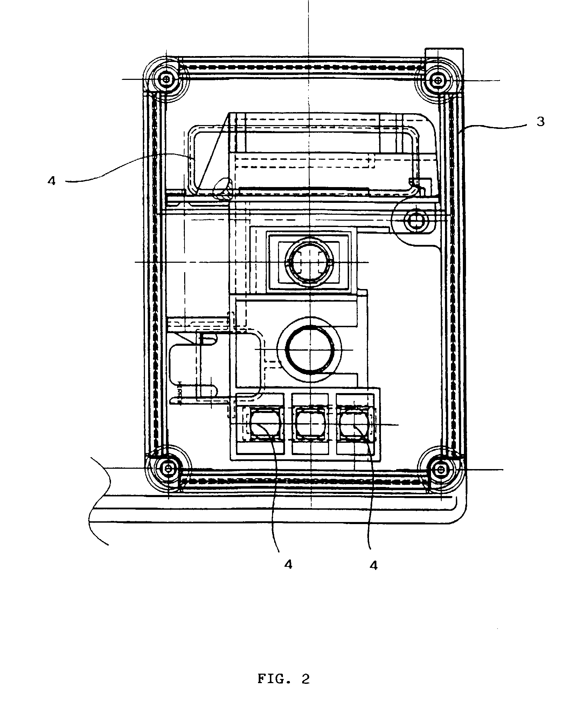

- Figure 2 is a front view of the control panel illustrated in Figure 1, shown here without its rigid front side;

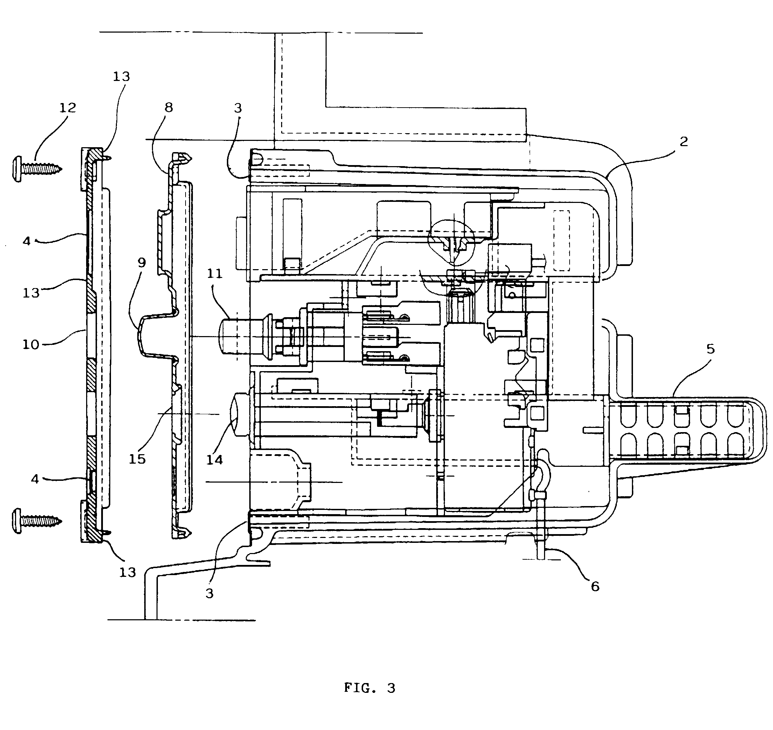

- Figure 3 is a cut-away cross-section view of the major component parts of the control panel according to the present invention.

The present invention resides substantially in the provision of a type of control panel which is adapted to be arranged inside the food storage compartment, and which is made air-tight in its construction by means of appropriate measures.

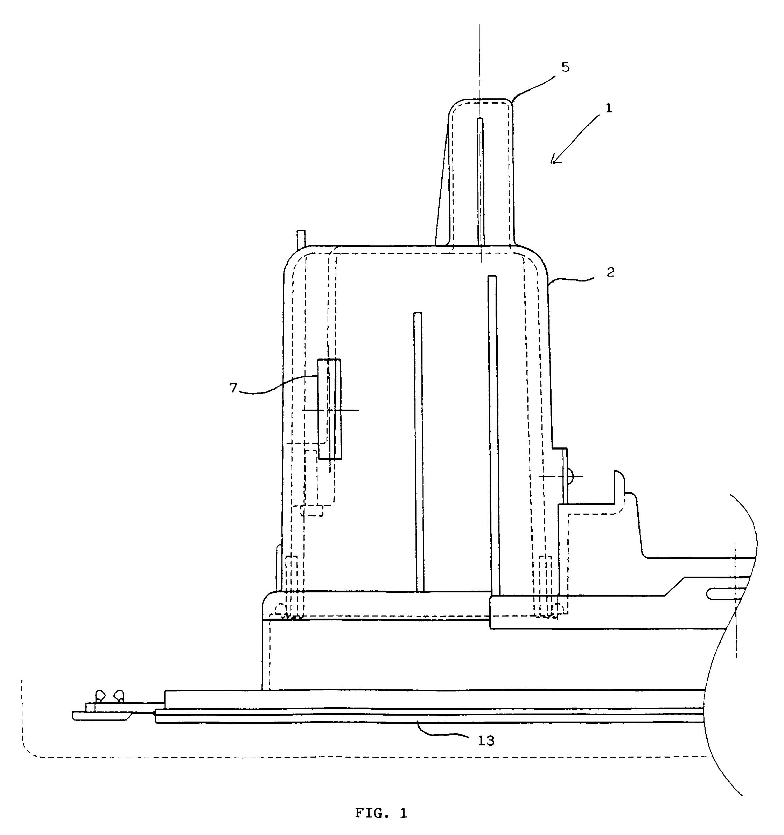

With reference to Figure 1, said control panel 1 adapted to be arranged inside the food storage compartment consists essentially of an outer casing 2 and a front wall 13 that closes hermetically against the continuous edge 3 running all around the periphery of the front side of said outer casing, said front wall being provided with a few small viewing windows 4 for looking at the indicator or warning lights and possible other optical indications generated inside the control panel.

In the rear portion of said control panel there is provided a prolonged adjunct 5 containing the thermostat probe (not shown) and capable, through said prolongation, of enabling said thermostat probe to be sited in such a position as to avoid being affected by the temperature prevailing inside the control panel, while being immersed to the greatest possible extent in the atmosphere of the food storage compartment, so as to be able to sense the actual temperature that prevails in said compartment.

In a preferred manner, all electric lead wires 6 entering said control panel are bundled together and enter the control panel through a single opening 7; furthermore, said opening 7 is sealed by means of insulating foam material, which in a preferred way is the same foam material used to fill the insulating hollow spaces of the outer casing of the refrigeration apparatus, so as to achieve effective sealing by using a really cost-effective, automated manufacturing process.

As noted before, the outer front wall is provided with a plurality of viewing apertures or windows 4 for the visualization of the optical signals generated inside the control panel. In order to ensure both the imperviousness of and the transparentness through said apertures or windows 4, a substantially transparent membrane 8 is arranged between the inner peripheral edges of said front wall 13 and the corresponding peripheral edges 3 of the outer casing 2.

Mutual attachment of said front wall to the transparent membrane, and of said component parts against the continuous peripheral edge 3 may be performed using various techniques that are largely known in the art. In particular, it can be performed by means of screws 12 applied at the corners of said front wall and inserted in the edges of the casing by passing through the corresponding corner portions of the transparent membrane.

In view of creating the possibility of manually adjusting or setting the control devices arranged inside said control panel, said transparent membrane is substantially flexible and comprises at least a relief portion 9 which coincides with a corresponding access aperture 10 of said front wall outwardly, and a control device 11 of said control panel inwardly.

Further adaptations are of course possible in accordance with the type of control devices used in the control panel. So, for instance, a rotating adjustment stem 14 may be provided to come out of the front wall of said control panel, with a corresponding opening 15 being provided in said membrane for the passage of said stem where it comes out of said front wall. In order to ensure the due air-tightness of the control panel, the elasticity properties of the membrane, as well as the diameter and the position of said opening 15 shall be such as to be adapted to ensure a perfect sealing action of said membrane against said rotating stem. This is however within the normal capability of anyone skilled in the art, who may identify other technical solutions and improvements in the use of the control panel by resorting to techniques and knowledges that are normally available in the art. Therefore, although it has been described here using a generally known terminology, the present invention shall not be intended as being limited in its scope by the given example, since anyone skilled in the art will now be able to make any variation and change as considered to be adequate, without departing from the scope of the present invention as defined in claim 1.

## Claims

1. Refrigeration apparatus, in particular a household-type refrigerator or freezer, comprising at least a compressor, a condenser, one or more evaporators associated to at least a food storage compartment and containing inflammable gas, and a control and display panel (1) housed within said food storage compartment and accessible by the atmosphere thereof, said control panel being further connected via electric lead wires (6) to the remaining portion of the electric circuit, **characterized in that** said control panel (1) is enclosed in an air-tight sealing enclosure (2), and that said panel (1) further comprises in its inner portion an extension (5) adapted to accomodate a thermostat probe.

2. Refrigeration apparatus according to claim 1, **characterized in that** an aperture (7) through which said electric lead wires (6) are brought into said control panel (1) is sealed by means of insulating foam material, said electric lead wires being embedded in said foam material.

3. Refrigeration apparatus according to claim 2, **characterized in that** the exposed portion of said control panel (1) comprises a removably attached outer front wall (13), which is provided with a plurality of viewing apertures (4), for displaying the optical signals issuing from the interior of the control panel, and a substantially transparent membrane (8) arranged between the outer peripheral edges of said control panel and the inner surface of said outer front wall.

4. Refrigeration apparatus according to claim 3, **characterized in that** said transparent membrane (8) is substantially flexible and comprises at least a relief portion (9) which coincides outwardly with an aperture (10) of said front wall (13) and inwardly with a control device (11) of said control panel.

5. Refrigeration apparatus according to claim 3 or 4, **characterized in that** a rotating adjustment stem (14) is provided coming out from the front wall (13) of said control panel, and that an opening (15) is provided in said elastic membrane (8) in correspondence of the exit site of said stem, said opening having such a diameter and being positioned so as to ensure an air-tight sealing effect of said membrane against said stem.

## Patentansprüche

1. Kühlgerät, insbesondere Haushaltkühl- oder -gefrierschrank, zumindest umfassend einen Kompressor, einen Kondensor, einen oder mehrere Verdampfer, der (die) zumindest einem Lebensmittel-Lagerfach zugeordnet ist (sind) und ein brennbares Gas enthält (enthalten), sowie ein Steuer- und Anzeigepult (1), welches innerhalb des Lebensmittel-Lagerfaches angeordnet und durch dessen Atmosphäre zugänglich ist, wobei das Steuerpult weiterhin über elektrische Drahtleitungen (6) mit dem übrigen Teil der elektrischen Schaltung verbunden ist, **dadurch gekennzeichnet,** daß das Steuerpult (1) von einer luftdichten Umhüllung (2) eingeschlossen ist, und daß das Pult (1) an seiner Innenseite weiterhin einen Anhang (5) umfaßt, der so gestaltet ist, daß er einen thermostatischen Fühler aufnehmen kann.

2. Kühlgerät nach Anspruch 1, **dadurch gekennzeichnet,** daß eine Öffnung (7) durch welche die elektrischen Leitungsdrähte (6) in das Steuerpult 81) eingeführt werden, mittels eines isolierenden Schaumwerkstoffes abgedichtet sind, und daß die elektrischen Leitungsdrähte in dem Schaumwerkstoff eingebettet sind.

3. Kühlgerät nach Anspruch 2, **dadurch gekennzeichnet,** daß der nach außen weisende Bereich des Steuerpultes (1) eine lösbar befestigte äußere Frontplatte (13) umfaßt, die mit einer Anzahl von Sichtöffnungen (4) zur Sichtbarmachung der optischen Signale, die im Inneren des Steuerpultes erzeugt werden, versehen ist, und daß eine im wesentlichen transparente Membrane (8) zwischen den äußeren Umfangskanten des Steuerpultes und der Innenfläche der äußeren Frontplatte angeordnet ist.

4. Kühlgerät nach Anspruch 3, **dadurch gekennzeichnet,** daß die transparente Membrane (8) im wesentlichen flexibel ist und mindestens einen hervorstehenden Bereich (9) aufweist, welcher sich nach außen mit einer Öffnung (10) in der Frontplatte (13) und nach innen mit einer Steuereinrichtung (11) des Steuerpultes deckt.

5. Kühlgerät nach Anspruch 3 oder 4, **dadurch gekennzeichnet,** daß eine drehbare Stellachse (14) vorgesehen ist, welche aus der Frontplatte (13) des Steuerpultes herausragt, und daß eine Öffnung (15) in der elastischen Membrane (8) entsprechend der Austrittsstelle der Achse vorgesehen ist, und daß die Öffnung einen solchen Durchmessr besitzt und so angeordnet ist, daß eine luftdichte Abdichtung zwischen der Membrane und der Achse gewährleistet ist.

## Revendications

1. Appareil de refroidissement, en particulier réfrigérateur ou congélateur de type domestique, comprenant au moins un compresseur, un condenseur, un ou plusieurs évaporateurs associés à au moins un compartiment de stockage d'aliments et contenant des gaz inflammables, et un panneau de commande et d'affichage (1) logé dans ledit compartiment de stockage d'aliments et accessible à l'atmosphère de ce dernier, ledit panneau de commande étant en outre connecté, via des fils conducteurs électriques (6), à la partie restante du circuit électrique, caractérisé en ce que ledit panneau de commande (1) est renfermé dans une enceinte (2) étanche à l'air, et en ce que ledit panneau (1) comprend en outre, dans sa partie intérieure, un prolongement (5) adapté à loger une sonde de thermostat.

2. Appareil de refroidissement selon la revendication 1, caractérisé en ce qu'une ouverture (7), par laquelle lesdits fils conducteurs électriques (6) sont amenés dans ledit panneau de commande (1), est fermée hermétiquement au moyen d'un matériau alvéolaire d'isolation, lesdits fils conducteurs électriques étant noyés dans ledit matériau alvéolaire.

3. Appareil de refroidissement selon la revendication 2, caractérisé en ce que la partie expcsée dudit panneau de commande (1) comprend une paroi avant (13) extérieure, fixée de manière amovible, qui est pourvue d'une pluralité d'ouvertures d'observation (4) afin d'afficher les signaux optiques issus de l'intérieur du panneau de commande, et une membrane (8) sensiblement transparente, agencée entre les bords périphériques extérieurs dudit panneau de commande et la surface intérieure de ladite paroi avant extérieure.

4. Appareil de refroidissement selon la revendication 3, caractérisé en ce que ladite membrane transparente (8) est sensiblement flexible et comprend au moins une partie à relief (9) qui coïncide, à l'extérieur, avec une ouverture (10) de ladite paroi avant (13) et, à l'intérieur, avec un dispositif de commande (11) dudit panneau de commande.

5. Appareil de refroidissement selon la revendication 3 ou 4, caractérisé en ce qu'une tige de réglage !14) rotative est prévue, sortant de la paroi avant (13) dudit panneau de commande, et en ce qu'une ouverture (15) est prévue dans ladite membrane élastique (8) devant le site de sortie de ladite tige, ladite ouverture ayant un diamètre et étant positionnée de manière à assurer un effet d'isolation à l'air de ladite membrane contre ladite tige.
